# EUROPÄISCHE PATENTSCHRIFT

(11) **EP 3 207 805 B1**
(45) Veröffentlichungstag und Bekanntmachung des Hinweises auf die Patenterteilung: **15.08.2018**
(21) Anmeldenummer: 16156463.8
(22) Anmeldetag: 19.02.2016
(51) Int. Cl.: A22C 11/02

(54) **ABFÜLLEN VON LEBENSMITTELN MIT FESTEM UND FLÜSSIGEM ANTEIL**
PACKING COMESTIBLES WITH SOLID AND LIQUID CONTENT
REMPLISSAGE DE PRODUITS ALIMENTAIRES AVEC COMPOSANTE SOLIDE ET LIQUIDE

(43) Veröffentlichungstag der Anmeldung: 23.08.2017
(73) Patentinhaber: Albert Handtmann Maschinenfabrik GmbH & Co. KG, 88400 Biberach (DE)
(72) Erfinder: Staudenrausch, Martin, 88400 Biberach (DE); Kloos, Daniel, 88400 Ringschnait (DE); Wiemann, Uwe, 49536 Lienen (DE)
(74) Vertreter: Grünecker Patent- und Rechtsanwälte PartG mbB

(56) Entgegenhaltungen:
- EP-A1- 2 965 630
- DE-C- 47 634
- FR-A1- 3 022 115
- GB-A- 180 448
- GB-A- 1 315 072
- US-A- 3 835 503

## Beschreibung

Die Erfindung betrifft ein Verfahren zum Abfüllen von Lebensmitteln sowie eine Füllmaschine gemäß den Oberbegriffen der Ansprüche 1 und 10. Die EP2965630A1 beschreibt ein Verfahren zum Zwischenreinigen einer Füllmaschine, wobei Reinigungsmedium über eine Spritzeinrichtung auch in den unteren Bereich des Trichters gespritzt werden kann. Die DE1315072A beschreibt ebenfalls bereits eine Wurstmaschine mit einer Zahnradpumpe unterhalb eines Trichters. Es werden bereits vor dem Ausstoßen unterschiedliche Substanzen in der Pumpe gemischt. Dazu weißt die Pumpe einen Einlass auf, wobei das zu fördernde Material in die Pumpe sowohl über den Trichter als auch über den Einlass zugeführt wird.

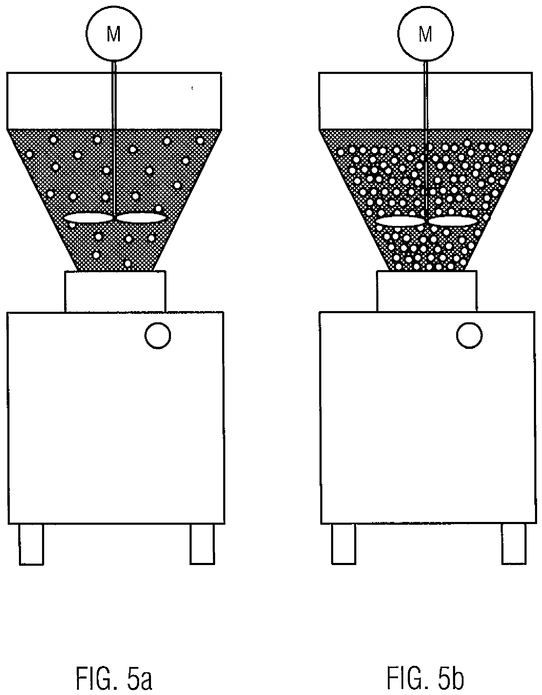

Bei der Lebensmittelherstellung, insbesondere Wurstherstellung, die einen vorbestimmten Anteil von stückigen Einlagen in Flüssigkeit umfassen, kommt es bei der Herstellung zu erheblichen Problemen. Solche Lebensmittel sind beispielsweise Würste mit Fleisch- und / oder Gemüseeinlagen in Aspik, Gulaschsuppe oder Fischsalate. Bis zu einem Mischverhältnis von ca. 50 % Einlagen zu 50 % Flüssiganteil, insbesondere 40 % Einlagen zu 60 % Flüssiganteil können die Einlagen mit Hilfe von Rührern oder einer Mischkurve mit separatem Antrieb aufgeschwemmt werden, um so die Einlagen in der Flüssigkeit homogen zu verteilen, wie beispielsweise in der Fig. 5a dargestellt ist. Mit zunehmenden Anteilen an Einlagen ist der Flüssigkeitsanteil zu gering, um die Einlagen aufschwemmen zu können. Diese werden durch Rühren dann mehr und mehr zerstört, anstatt homogen verteilt, wie beispielsweise aus der Fig. 5b hervorgeht.

Lassen sich die Einlagen aufgrund von zu hohem Anteil an Einlagen in der Flüssigkeit nicht mehr aufrühren und homogen verteilen, werden die Produkte bisher z.B. wie folgt hergestellt:
- Die fertige Mischung wird mit Schöpfkellen oder ähnlichem Werkzeug manuell in Därme, Schalen, Tiefziehanlagen oder sonstige Behältnisse gefüllt. Das Mischungsverhältnis wird dabei visuell vom Abfüller kontrolliert.
- Es ist auch möglich, dass die Einlagen zuerst getrennt von der Flüssigkeit in das Behältnis etc. gefüllt werden (manuell oder maschinell), wobei die Einlagen über eine Waage kontrolliert werden können. Danach wird das Behältnis mit dem Flüssiganteil aufgefüllt. Dies kann über ein bestimmtes Volumen ebenso manuell oder maschinell durchgeführt werden.

Beide Methoden sind sehr aufwendig, kostenintensiv und es wird nur eine relativ geringe Stundenleistung (Kg/h) pro Person erreicht. Außerdem ist es beim zweiten Arbeitsverfahren schwierig, die Einlagen produktschonend abzufüllen. Darüber hinaus ist eine exakte Einstellung eines vorbestimmten Anteils stückiger Einlagen in Flüssigkeit nicht möglich. Eine homogene Verteilung ist ebenfalls nicht gewährleistet.

Hiervon ausgehend liegt der vorliegenden Erfindung die Aufgabe zugrunde, ein verbessertes Verfahren und eine verbesserte Vorrichtung zum Abfüllen von Lebensmittel, das einen vorbestimmten Anteil stückiger Einlagen in Flüssigkeit aufweist, bereitzustellen, die auf einfache Art
und Weise ein gleichbleibendes bestimmtes Verhältnis von flüssigem Anteil zu den festen Einlagen bei gleichzeitig hoher Produktivität ermöglichen.

Erfindungsgemäß wird diese Aufgabe durch die Merkmale der Ansprüche 1 und 10 gelöst.

Bei dem erfindungsgemäßen Verfahren werden die stückigen Einlagen jetzt ohne Flüssigkeit ( oder zumindest mit einem geringeren Flüssigkeitsanteil als im abzufüllenden Lebensmittel bzw. im Endprodukt) in den Trichter z.B. einer Füllmaschine gefüllt. Während des Abfüllvorgangs wird Flüssigkeit in den unteren Bereich des Trichters zudosiert. Unter unterem Bereich versteht man beispielsweise die unteren 10 bis 50 %, insbesondere die unteren 30% der gesamten Höhe eines Trichters. Durch das Einspritzen der Flüssigkeit im unteren Trichterbereich wird ein Verkeilen der Einlagen im konisch zulaufenden Trichter verhindert. Die Einlagen können somit im unteren Bereich des Trichters freigespült und aufgeschwemmt werden und und gelangen in diesem Zustand in ein Förderwerk, das an den unteren Bereich des Trichters anschließt. Das fertig gemischte Lebensmittel kann so mit einem vorbestimmten Verhältnis von stückiger Einlage zu Flüssigkeit aus dem Trichter gefördert und in ein Behältnis, wie z.B. Wursthülle, Schale, Tiefziehanlage etc. über ein Dosierorgan, wie beispielsweise ein Füllrohr, abgefüllt werden. Somit kann auf einfache Art und Weise durch Einleiten der Flüssigkeit in den unteren Bereich ein bestimmtes Verhältnis von Flüssigkeit zu Einlage eingestellt werden und das Lebensmittelprodukt kontinuierlich und automatisch gefertigt werden. Eine homogene Verteilung der Einlagen ist ebenfalls gewährleistet. Mit dem erfindungsgemäßen Verfahren kann ein hoher Durchsatz erzielt werden. Das erfindungsgemäße Verfahren kann auch automatisch ablaufen.

Es ist besonders vorteilhaft, dass zum Einstellen eines bestimmten Flüssigkeitsanteils während des Abfüllvorgangs eine bestimmte Flüssigkeitsmenge pro Zeit, entsprechend einer bestimmten Flüssigkeitsmenge pro abgeförderter Menge bzw. Volumen des gemischten Lebensmittels, zudosiert wird. Dabei kann insbesondere die Förderleistung (z.B. Volumen/Zeit) einer Pumpe, die die Flüssigkeit zudosiert, entsprechend gesteuert oder geregelt werden. Mit zunehmender Förderleistung steigt der Flüssigkeitsanteil im abzufüllenden Lebensmittel und somit im fertigen Produkt.

Die zudosierte Flüssigkeitsmenge kann beispielsweise über die Steuerung einer Füllmaschine, die die Portionierung vornimmt, geregelt werden.

Alternativ oder zusätzlich ist es auch möglich, dass zum Einstellen eines bestimmten Flüssigkeitsanteils der Flüssigkeitsfüllstand im Trichter eingestellt, insbesondere geregelt wird. Je höher der Flüssigkeitsfüllstand ist, umso mehr Flüssigkeitsanteil befindet sich im Lebensmittel bzw. im fertigen Produkt. Der Flüssigkeitsfüllstand kann z.B. visuell über ein Schauglas oder mittels eines geeigneten Sensors ermittelt werden.

Der Füllstand kann dann z.B. als Regelgröße durch die Pumpe als Stellglied geregelt werden

Es ist auch möglich, dass der Füllstand der stückigen Einlagen bestimmt wird, z.B. ebenfalls visuell über ein Schauglas, oder mit einem Spiegel am Trichterrand, oder mittels eines geeigneten Sensors und der Füllstand auf einen vorbestimmten Wert oder Bereich eingestellt wird, wobei insbesondere der Füllstand so niedrig eingestellt oder geregelt wird, dass er kleiner als 10 % bis 50 % der Trichterhöhe ist. Der Füllstand wird höher eingestellt als die Höhe der Zuführeinrichtung für die Flüssigkeit, so dass sich die Flüssigkeit in den stückigen Einlagen ausbreiten kann. Es ist vorteilhaft, wenn der Füllstand im Trichter möglichst niedrig gehalten wird. Dies verhindert eine Schädigung der Einlagen, insbesondere ein Verkeilen der Einlagen und begünstigt eine homogene Verteilung und Aufschwemmen der Einlagen aufgrund des verminderten Drucks.

Die Befüllung des Trichters mit stückigen Einlagen kann dabei z.B. über ein Fördermittel erfolgen, wobei die Förderleistung (z.B. kg/h) in Abhängigkeit des gemessenen Füllstands der stückigen Einlagen geregelt wird. Somit ist auf einfache Art und Weise ein kontinuierlicher Herstellungsprozess möglich.

Gemäß der vorliegenden Erfindung liegt der vorbestimmte Anteil der stückigen Einlagen vorzugsweise in einem Bereich von 30 % bis 80 % des gesamten Lebensmittels (entsprechend 70 % bis 20 % Flüssigkeitsanteil), insbesondere in einem Bereich von 40 % bis 70 % (entsprechend 60 % bis 30 % Flüssigkeitsanteil). Das Volumen eines Einlagenstücks liegt z.B. in einem Bereich von 1 cm³ bis 80 cm³. Ganz besonders vorteilhaft ist dieses Verfahren bei einem Anteil von > 50 % der stückigen Einlagen.

Die stückigen Einlagen können mindestens eine Einlage aus folgender Gruppe umfassen: Fleischstücke, Gemüsestücke, Fischabschnitte, etc. Die Flüssigkeit kann eine Flüssigkeit insbesondere aus folgender Gruppe sein: flüssiges Aspik, Öle, Salatsoßen, Bratensoßen, Suppen, Brühen, etc.

Die Flüssigkeit kann derart eingeleitet werden, dass sie eine Bewegungskomponente in Horizontalrichtung umfasst. Das heißt, dass die Flüssigkeit sich zumindest teilweise seitlich ausdehnt und bewegt, was eine homogene Verteilung im Trichter begünstigt. Dazu können beispielsweise Öffnungen im Seitenbereich einer Zuführeinrichtung, die der Trichterwand zugewandt sind, vorgesehen sein. Auch ein tangentiales Einleiten der Flüssigkeit, das den Inhalt im Trichter in eine Rotationsbewegung versetzt ist möglich.

Die Erfindung betrifft auch eine Füllmaschine zum Durchführen des Verfahrens nach mindestens einem der Ansprüche 1-9 mit einem Trichter zur Aufnahme von stückigen Einlagen, einem Förderwerk zum Fördern des Lebensmittels aus dem Trichter in ein Dosierorgan. Weiter ist eine Zuführeinrichtung zum Zuführen von Flüssigkeit in einen unteren Bereich des Trichters vorgesehen. Eine Zuführeinrichtung zum Zuführen von Flüssigkeit in den unteren Bereich bedeutet, dass die Zuführeinrichtung im unteren Bereich mindestens eine Auslassöffnung für die Flüssigkeit aufweist.

Die Zuführeinrichtung umfasst dabei z.B. eine Leitung, die in den unteren Bereich des Trichters mündet sowie eine Pumpe. Die Leitung, die sich vorzugsweise bis in den Trichter erstreckt und beispielsweise als Lanze ausgebildet ist, ist derart ausgebildet, dass die Bewegungsrichtung der Flüssigkeit beim Austritt im Wesentlichen horizontal ist oder zumindest eine Richtungskomponente in Horizontalrichtung aufweist. Dabei kann die Leitung z.B. zumindest abschnittsweise zentrisch im Trichter angeordnet sein und seitliche Auslassöffnungen aufweisen. Es ist aber auch möglich, dass die Leitungen z.B. an ihrem unteren Ende eine Verteilereinrichtung aufweist mit mehreren Auslassöffnungen, z.B. seitlichen Auslassöffnungen. Eine entsprechende Ausbildung ermöglicht ein besonders gleichmäßiges Aufschwemmen. Es ist auch möglich, dass die Leitung um ihre Längsachse drehbar ausgeführt ist und von einem Motor gedreht wird. Die Leitung kann auch gemäß einem anderen Ausführungsbeispiel von außen in einen Tangentialeinlass am Trichter münden, derart dass die Flüssigkeit im Wesentlichen tangential zur Trichterwandung eingeleitet wird, so dass die Flüssigkeit im konisch zulaufenden Trichter in eine Rotationsbewegung versetzt wird.

Vorteilhafterweise weist die Vorrichtung einen Füllstandsensor zum Messen des Füllstands der Flüssigkeit und/oder einen Füllstandsensor zum Messen des Füllstands der stückigen Einlagen auf.

Die Füllmaschine umfasst vorzugsweise eine Steuereinrichtung, die die Pumpe ansteuert, um einen vorbestimmten Flüssigkeitsanteil im Lebensmittel zu erhalten. Der Antrieb der Pumpe ist vorzugsweise mit dieser Steuereinrichtung verbunden. Gemäß einer bevorzugten Ausführungsform ist die Pumpe das Förderwerk einer zweiten Füllmaschine, in deren Trichter die Flüssigkeit für das Lebensmittel gelagert ist. Somit kann die Flüssigkeit aus der zweiten Maschine in den unteren Bereich des Trichters der ersten Füllmaschine gefördert werden. Hierzu ist das Förderwerk, insbesondere die Steuerung der zweiten Füllmaschine über eine Schnittstelle mit der ersten Füllmaschine, d.h. mit deren Steuerung, verbunden. Es ist auch möglich, dass die Pumpe eine separate Flüssigkeitspumpe ist, die Flüssigkeit aus einem Behälter dem Trichter der Füllmaschine zuführt. Diese Pumpe kann einen separaten Antrieb aufweisen, jedoch auch über einen Antrieb der ersten Füllmaschine angetrieben werden. Die Leitung kann ein Ventil aufweisen, insbesondere ein Rückschlagventil, um ein unkontrolliertes Nachlaufen der Flüssigkeit in den Trichter zu verhindern.

Die Erfindung wird nachfolgend unter Bezugnahme folgender Figuren näher erläutert.
- Fig. 1: zeigt grob schematisch einen Längsschnitt durch ein erstes Ausführungsbeispiel gemäß der vorliegenden Erfindung mit einer Füllmaschine.
- Fig. 2: zeigt grob schematisch einen Längsschnitt durch ein zweites Ausführungsbeispiel gemäß der vorliegenden Erfindung mit zwei Füllmaschinen.
- Fig. 3: zeigt in perspektivischer Darstellung das Trichterinnere mit stückigen Einlagen.
- Fig. 4: zeigt grob schematisch eine Leitung mit Verteilereinrichtung.
- Fig. 5a,b: zeigen Füllmaschinen gemäß dem Stand der Technik.

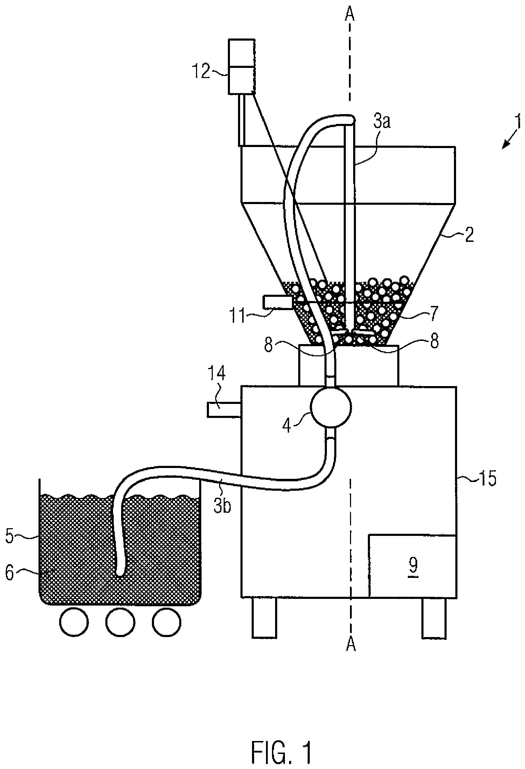

Figur 1 zeigt ein erstes Ausführungsbeispiel der vorliegenden Erfindung. Die Füllmaschine 1, beispielsweise eine Vakuumfüllmaschine, umfasst einen Trichter 2, der zumindest abschnittsweise konisch nach unten zuläuft.

An das untere Ende des Trichters schließt sich ein nicht dargestelltes Förderwerk an, das den Trichterinhalt in ein Dosierorgan 14, z.B. ein Füllrohr 14 transportieren bzw. drücken kann, um Lebensmittel abzufüllen. Bei der vorliegenden Erfindung wird Lebensmittel abgefüllt, das einen vorbestimmten Anteil stückiger Einlagen 7 in Flüssigkeit 6 umfasst. Der Anteil der stückigen Einlagen im gesamten Lebensmittel liegt vorzugsweise in einem Bereich von 30 % bis 80 %, insbesondere in einem Bereich von 40 % bis 70 %. Das Volumen der Einlagestücke liegt beispielsweise in einem Bereich von 1 cm³ bis 80 cm³. Die stückigen Einlagen können z.B. eine Einlage aus folgender Gruppe umfassen: Fleischstücke, Gemüsestücke, Fischabschnitte, etc. Die Flüssigkeit kann eine Flüssigkeit, insbesondere aus folgender Gruppe sein: Flüssiges Aspik, Öle, Salatsoßen, Bratensoßen, Suppen, Brühen, etc.. Die Füllmaschine umfasst ferner ein Gehäuse 15.

Gemäß der vorliegenden Erfindung weist die Füllmaschine 1 nun eine Zuführeinrichtung 3a, b, 5, 4 zum Zuführen von Flüssigkeit 6 in den unteren Bereich des Trichters 2 auf. Unterer Bereich bedeutet hier beispielsweise die unteren 10 % bis 50 %, vorzugsweise den unteren 30% der gesamten Höhe des Trichters 2. In diesem Ausführungsbeispiel umfasst die Zuführeinrichtung einen Behälter 5, der beispielsweise neben dem Gehäuse der Füllmaschine 1 aufgestellt ist und besonders vorteilhaft auf Rollen fahrbar ausgebildet ist. In dem Behälter 5 ist die Flüssigkeit 6 aufgenommen. Das Volumen des Behälters liegt z.B. in einem Bereich von 100 l - 300 l. Wenn die Flüssigkeit eine bestimmte Temperatur aufweisen muss, beispielsweise im Fall von warmem flüssigem Aspik kann der Behälter 5 beheizbar ausgebildet sein. Die Zuführeinrichtung umfasst ferner eine Leitung 3b, 3a, über die die Flüssigkeit 6 in den unteren Bereich des Trichters 2 geleitet werden kann. In diesem Fall, ist die Leitung zumindest abschnittsweise als flexibler Schlauch ausgebildet. Um die Flüssigkeit 6 in den unteren Bereich des Trichters 2 zu fördern, umfasst die Zuführeinrichtung weiter eine Pumpe 4 in der Leitung 3b, 3a.

Die Pumpe 4 kann eine separate Förderpumpe, z.B. eine Schlauch-, Zahnrad-,Drehkolben-Flügelzellenpumpe etc. sein, die beispielsweise von der Steuereinrichtung 9 in der Füllmaschine 1, die auch die anderen Funktionselemente der Füllmaschine, wie beispielsweise Förderwerk ansteuert, angesteuert wird. Die Pumpe 4 kann jedoch eine Pumpe sein, die über einen Antrieb der Füllmaschine 1 angetrieben wird. Dieser Antrieb kann in der Füllmaschine integriert sein. Das heißt, dass eine entsprechende Förderpumpe ohne einen eigenen Antrieb an die Füllmaschine gekoppelt werden kann und keinen eigenen Antrieb aufweist und durch einen ohnehin für andere Funktionen bereits bestehenden Antrieb angetrieben werden kann. Somit kann eine entsprechende Förderpumpe einfach nachgerüstet werden. Es ist aber auch möglich, eine Förderpumpe mit eigenem Antrieb vorzusehen. Die Leitung, insbesondere der Leitungsabschnitt 3a, nach der Förderpumpe 4 erstreckt sich zumindest teilweise bis ins Innere des Trichters 2, wobei mindestens eine Auslassöffnung 8 in den unteren Bereich des Trichters 2 mündet um hier Flüssigkeit einzubringen. Bei diesem Ausführungsbeispiel ist der Leitungsabschnitt 3a, der in das Trichterinnere ragt, als Lanze ausgebildet. Dabei sind die Auslassöffnungen 8 vorzugsweise an der Seite der Leitung angeordnet, derart, dass die Öffnungen, die um den Umfang der Leitung verteilt angeordnet sind, zur Wandung des Trichters 2 gerichtet sind. Somit kann Flüssigkeit von der vorzugsweise zentrisch angeordneten Leitung 3a zu den Außenwandungen des Trichters 2 strömen, was zu einem verbesserten Aufschwemmen und somit homogener Verteilung der Einlagen führt.

Darüber hinaus ist es auch möglich, dass die Leitung 3a bzw. die Lanze um die Achse über einen entsprechenden Antrieb drehbar ausgebildet ist, was das Aufschwemmen der Einlagen noch weiter begünstigen kann.

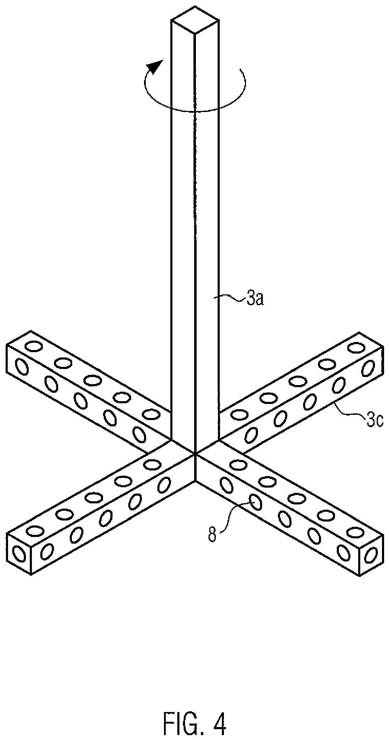

Wenn auch nicht dargestellt, kann am Ende der Leitung 3a eine Verteilereinrichtung 3c z.B. in Form von mindestens einem sich seitlich erstreckenden Leitungsabschnitt vorgesehen sein, über den Flüssigkeit in den Trichter 2 eingebracht werden kann. Figur 4 zeigt nur beispielshaft eine entsprechende Verteilereinrichtung 3c, die sich an das untere Ende der Leitung 3a anschließt und die mehrere seitliche Auslassöffnungen aufweist. Zusätzlich können auch Auslassöffnungen im oberen und/oder unteren Bereich der Verteilereinrichtung vorgesehen sein. Figur 4 ist nur ein Beispiel für eine mögliche Verteilereinrichtung.

In der Leitung 3a kann ein nicht dargestelltes Ventil, insbesondere gesteuertes oder selbststeuerndes Ventil, beispielsweise ein Rückschlagventil, insbesondere am unteren Ende der Leitung 3a vorgesehen sein, um zu verhindern, dass Flüssigkeit unkontrolliert nachläuft und somit sich das Mischungsverhältnis zwischen Festanteil und Flüssigkeit unkontrolliert verändert, wenn die Vorrichtung zeitweise gestoppt wird.

Die Füllmaschine 1 weist weiter einen Füllstandsensor 11 auf, der den Füllstand der Flüssigkeit im Trichter 2 messen kann. Als entsprechender Füllstandsensor, kann beispielsweise ein optischer oder kapazitiver Sensor, oder ein Radar- oder Ultraschallsensor etc. verwendet werden. Darüber hinaus ist noch ein Füllstandsensor 12 für die Einlagen 7 vorgesehen. Ein entsprechender Füllstandsensor kann beispielsweise ein optischer oder kapazitiver Sensor, oder ein Radar- oder Ultraschallsensor etc. sein. Sowohl der Füllstandsensor für die Flüssigkeit 11 als auch der Füllstandsensor für die Einlagen 12 können mit der Steuerung 9 verbunden sein.

Wenn auch nicht dargestellt, kann die Füllmaschine 1 ein Fördermittel (z.B. Förderband) aufweisen, das die stückigen Einlagen in den Trichter 2 fördert. Dieses Fördermittel kann beispielsweise ein über den Füllstandsensor 12 geregeltes Förderband sein. Somit kann der Füllstand auf einen bestimmten Wert eingestellt bzw. geregelt werden, z.B. derart, dass der Füllstand z.B. kleiner als 10 % bis 50 % der Trichterhöhe ist. Es ist vorteilhaft, wenn der Füllstand im Trichter möglichst niedrig (aber höher als die Zuführeinrichtung) gehalten wird. Dies verringert eine Schädigung der Einlagen, insbesondere ein Verkeilen der Einlagen und begünstigt eine homogene Verteilung und Aufschwemmung der Einlagen aufgrund des verminderten Drucks.

Der Anteil der Flüssigkeit im Lebensmittel, d.h. im fertigen Produkt kann beispielsweise über die Förderleistung der Pumpe 4, die die Flüssigkeit 6 zudosiert, gesteuert oder geregelt werden. Mit zunehmender Förderleistung steigt der Flüssigkeitsanteil im abzufüllenden Lebensmittel und somit im fertigen Produkt (bei konstanter Förderleistung des Förderwerks der Füllmaschine). Dazu umfasst die Steuereinrichtung 9 z.B. eine entsprechende Regeleinheit. Ein Sollwert für die Förderleistung der Pumpe 4 für einen gewünschten Flüssigkeitsanteil kann z.B. vorab experimentell bestimmt werden.

Alternativ oder zusätzlich ist es auch möglich, dass zum Einstellen eines bestimmten Flüssigkeitsanteils der Flüssigkeitsfüllstand im Trichter 2 eingestellt, insbesondere geregelt wird. D. h., die Pumpe 4 wird in Abhängigkeit eines Messsignals des Füllstandsensors 11 angetrieben. Je höher der Flüssigkeitsfüllstand ist, umso mehr Flüssigkeitsanteil befindet sich schließlich im abzufüllenden Lebensmittel bzw. im fertigen Produkt (bei konstanter Förderleistung des Förderwerks der Füllmaschine). Dazu kann die Steuereinrichtung 9 einen entsprechenden Regelabschnitt aufweisen. Es ist auch möglich, den Flüssigkeitsfüllstand z.B. visuell über ein Schauglas zu ermitteln und die Förderleistung entsprechend z.B. manuell einzustellen. Auch hier kann die Sollhöhe vorab experimentell für den gewünschten Flüssigkeitsanteil bestimmt werden.

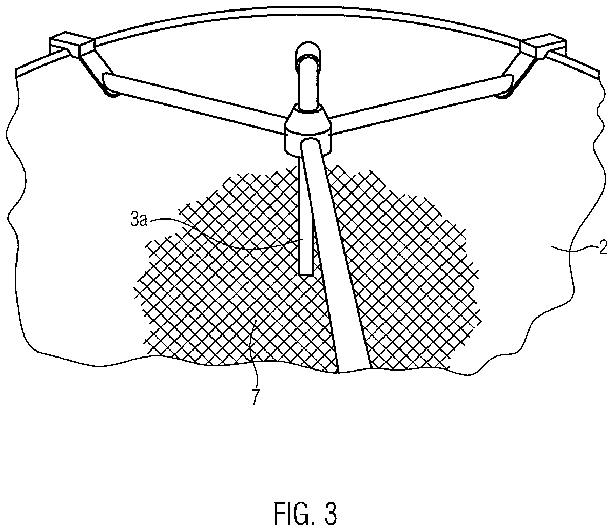

Figur 3 zeigt in perspektivischer Darstellung, das Trichterinnere mit stückigen Einlagen, sowie die Leitung 3a zum Zuführen der Flüssigkeit in den unteren Bereich des Trichters 2.

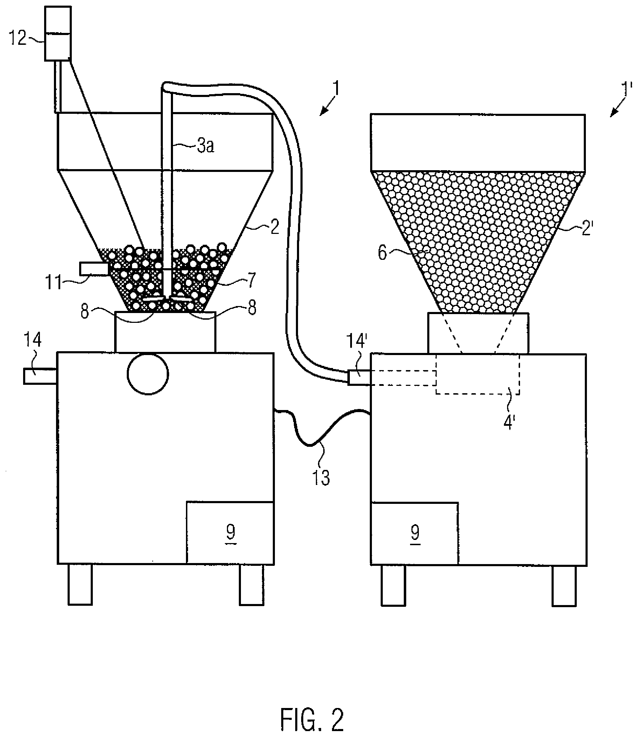

Figur 2 zeigt ein weiteres Ausführungsbeispiel gemäß der vorliegenden Erfindung. Das in Figur 2 gezeigte Ausführungsbeispiel entspricht dem in Figur 1 gezeigten Ausführungsbeispiel mit der Ausnahme, dass die Zuführeinrichtung hier statt des Behälters 5 und der Pumpe 4 eine zweite Füllmaschine 1' umfasst. Die zweite Füllmaschine weist ebenso wie die erste Füllmaschine einen Trichter 2' auf und ein Förderwerk, wobei das Förderwerk der Füllmaschine hier als Pumpe 4' zum Fördern der Flüssigkeit, die in dem Trichter 2' lagert, dient und die Flüssigkeit über ein Dosierorgan 14' der Leitung 3b, 3a und schließlich dem unteren Bereich des Trichters 2 zuführt. Die Steuerungen der Füllmaschinen 1;1' können über eine entsprechende Schnittstelle, z.B. ein Schnittstellenkabel 13 miteinander verbunden sein, derart, dass die Steuerung 9 der Füllmaschine 1 die Pumpe bzw. das Förderwerk 4' des zweiten Vakuumfüllers 1' ansteuern kann, oder über die Steuerung 9' ansteuern kann. Die Flüssigkeit kann in den Trichter 2' entweder über eine Hubeinrichtung oder eine Zuleitung zugeführt werden.

Die Zuführeinrichtungen, die in den vorherigen Ausführungsbeispielen beschrieben wurden, waren nur ein Beispiel. Wesentlich ist, dass die Zulaufeinrichtung derart ausgebildet ist, dass es zu einer möglichst gleichmäßigen Verteilung der Einlagen in der Flüssigkeit 6 kommt. Dazu ist es förderlich, wenn die Flüssigkeit 6 derart eingeleitet wird, dass sie eine Bewegungskomponente in Horizontalrichtung umfasst. Dazu kann beispielsweise auch alternativ ein Tangentialeinlass oder eine Verteilereinrichtung mit mehreren Öffnungen an der Trichterwand vorgesehen sein.

Das erfindungsgemäße Verfahren wird nachfolgend unter Bezugnahme der Figuren 1 und 2 näher erläutert.

Bei dem erfindungsgemäßen Verfahren werden stückige Einlagen, wie in Fig. 3 gezeigt ist, dem Trichter 2 zugeführt. Es ist besonders vorteilhaft, wenn die stückigen Einlagen über eine Transporteinrichtung, wie beispielsweise ein Transportband, kontinuierlich zugeführt werden können, derart, dass ein bestimmter Füllstand an Einlagen 7 im Trichter 2 eingestellt werden kann. Dazu kann die Förderleistung des Transportmittels in Abhängigkeit eines Messsignals des Füllstandsensors 12 geregelt werden. Während des Abfüllvorgangs wird über die Zuführeinrichtung 3a, b, 4, bzw. 4' Flüssigkeit 6 in den unteren Bereich des Trichters 2 zudosiert. Die Förderleistung der Zuführeinrichtung der stückigen Einlagen beträgt beispielsweise 500 kg/Stunde bis 2000 kg/Stunde und die Förderleistung der Pumpe 4 für die Flüssigkeit beträgt beispielsweise 500 kg/Stunde bis 2000 kg/Stunde.

Durch die zugeführte Flüssigkeit können die stückigen Einlagen im unteren Bereich gleichmäßig aufgeschwemmt und verteilt werden. Ein nicht dargestelltes Förderwerk transportiert dann das Lebensmittel in Richtung eines Füllorgans 14, wobei die Füllleistung des Förderwerks in einem Bereich von 500 kg bis 5000 kg pro Stunde liegt. Somit kann kontinuierlich ein Lebensmittelprodukt mit einem vorbestimmten Anteil stückiger Einlagen in der Flüssigkeit abgefüllt werden, wobei mit den zuvor genannten Parametern ein Flüssigkeitsanteil von z.B. 30 % -70 % erzielt werden kann.

Wie zuvor beschrieben kann der Anteil der stückigen Einlagen bzw. der Anteil der Flüssigkeit im Produkt über die Förderleistung der Förderpumpe 4, 4' eingestellt werden. Wie hoch die zugeführte Menge pro Zeit oder pro abgeführtem Volumen an fertig gemischten Lebensmitteln sein muss, um einen bestimmten Anteil an stückigen Einlagen bzw. Flüssigkeit zu erzielen, kann vorab experimentell bestimmt werden.

Es ist auch möglich, dass der Flüssigkeitsanteil über den Füllstand der Flüssigkeit 6 im Trichter 2 bestimmt wird. Der Füllstand kann wie beschrieben über den Füllstandsensor 11 bestimmt werden oder aber beispielsweise auch über ein Schauglas, wobei dann der Füllstand über die Förderleistung der Pumpe 4, 4' eingestellt oder automatisch geregelt wird. Wie hoch der Füllstand für einen bestimmten Flüssigkeits- bzw. für Einlagenanteil sein muss, kann vorab experimentell bestimmt werden.

Das Lebensmittel, dass dann aus der Flüssigkeit 6 und dem vorbestimmten Anteil 7 an stückiger Einlage besteht, wird über das Förderwerk und Förderorgan 14, beispielsweise Füllrohr z.B. in Wursthülle oder entsprechende Behälter abgefüllt.

## Patentansprüche

1. Verfahren zum Abfüllen von einem Lebensmittel, das einen vorbestimmten Anteil stückiger Einlagen (7) in Flüssigkeit (6) umfasst,
**dadurch gekennzeichnet, dass** die stückigen Einlagen (7) in einen Trichter (2) gefüllt werden,
die Flüssigkeit (6) während des Abfüllvorgangs in den unteren Bereich des Trichters (2) zudosiert wird und
das gemischte Lebensmittel aus den Trichter (2) gefördert und abgefüllt wird.

2. Verfahren nach Anspruch 1, **dadurch gekennzeichnet, dass** zum Einstellen eines bestimmten Flüssigkeitsanteils während des Abfüllvorgangs eine bestimmte Flüssigkeitsmenge pro Zeit oder pro abgeführtem Volumen an fertig gemischten Lebensmittel zudosiert wird, wobei insbesondere die Förderleistung einer Pumpe (4), die die Flüssigkeit zudosiert, entsprechend gesteuert oder geregelt wird.

3. Verfahren nach Anspruch 1 oder 2, **dadurch gekennzeichnet, dass** zum Einstellen eines bestimmten Flüssigkeitsanteils der Flüssigkeitsfüllstand im Trichter (2) eingestellt, insbesondere geregelt wird.

4. Verfahren nach mindestens einem der vorhergehenden Ansprüche, **dadurch gekennzeichnet, dass** der Füllstand der stückigen Einlagen (7) bestimmt wird und der Füllstand auf einen vorbestimmten Wert oder Bereich eingestellt oder geregelt wird, wobei insbesondere der Füllstand so niedrig eingestellt oder geregelt wird, dass er kleiner als 10 % bis 50 % der Trichterhöhe ist.

5. Verfahren nach mindestens einem der Ansprüche1-4, **dadurch gekennzeichnet, dass** die Befüllung des Trichters (2) mit stückigen Einlagen (7) über ein Fördermittel erfolgt, wobei die Förderleistung des Fördermittels in Abhängigkeit des gemessenen Füllstands der stückigen Einlagen geregelt wird.

6. Verfahren nach mindestens einem der Ansprüche1-5, **dadurch gekennzeichnet, dass** der vorbestimmte Anteil der stückigen Einlagen (6) im Lebensmittel in einem Bereich von 30 % bis 80 %, insbesondere in einem Bereich von 40 % bis 70 % liegt, und vorzugsweise das Volumen eines Stücks in einem Bereich von 1 cm³ bis 80 cm³ liegt.

7. Verfahren nach mindestens einem der Ansprüche1-6, **dadurch gekennzeichnet, dass** die stückigen Einlagen (7) mindestens eine Einlage aus folgender Gruppe umfassen: Fleischstücke, Gemüsestücke, Fischabschnitte.

8. Verfahren nach mindestens einem der Ansprüche1-7, **dadurch gekennzeichnet, dass** die Flüssigkeit insbesondere eine Flüssigkeit aus folgender Gruppe ist: flüssiges Aspik, Öle, Salatsoßen, Bratensoßen, Suppen, Brühen.

9. Verfahren nach mindestens einem der Ansprüche1-8, **dadurch gekennzeichnet, dass** die Flüssigkeit (6) derart eingeleitet wird, dass sie eine Bewegungskomponente in Horizontalrichtung umfasst.

10. Füllmaschine (1) zum Durchführen des Verfahrens nach mindestens einem der Ansprüche 1-9 mit
- einem Trichter (2) zur Aufnahme von stückigen Einlagen (7),
- einem Förderwerk zum Fördern des Lebensmittels aus dem Trichter (2) in ein Dosierorgan (14), und mit
einer Zuführeinrichtung (3a, b, 4) zum Zuführen von Flüssigkeit (6) in den unteren Bereich des Trichters (2), **dadurch gekennzeichnet, dass** die Füllmaschine (1) eine Steuereinrichtung (9) umfasst, die eine Pumpe (4) ansteuert, um einen vorbestimmten Flüssigkeitsanteil im Lebensmittel zu erhalten.

11. Füllmaschine (1) nach Anspruch 10, **dadurch gekennzeichnet, dass** die Zuführeinrichtung (3a, b, 4) eine Leitung (3a) umfasst, die in den unteren Bereich des Trichters (2) mündet, sowie eine Pumpe (4).

12. Füllmaschine (1) nach Anspruch 10 oder 11, **dadurch gekennzeichnet, dass** die Leitung (3b) derart ausgebildet ist, dass die Bewegungsrichtung der Flüssigkeit beim Austritt im Wesentlichen horizontal ist oder zumindest eine Richtungskomponente in Horizontalrichtung aufweist, wobei die Leitung vorzugsweise zumindest abschnittsweise zentrisch angeordnet ist und seitliche Auslassöffnungen (8) aufweist, oder dass die Leitung am unteren Ende eine Verteilereinrichtung (3c) aufweist mit mehreren Auslassöffnungen (8).

13. Füllmaschine (1) nach mindestens einem der Ansprüche 10-12, **dadurch gekennzeichnet, dass** die Füllmaschine einen Füllstandsensor (11) für die Flüssigkeit (6) und/oder einen Füllstandsensor (12) für die stückigen Einlagen (7) umfasst.

14. Füllmaschine (1) nach mindestens einem der Ansprüche 10-13, **dadurch gekennzeichnet, dass** die Pumpe das Förderwerk einer zweiten Füllmaschine (1') ist, in deren Trichter (2') die Flüssigkeit (7)für das Lebensmittel gelagert ist oder
dass die Pumpe eine separate Flüssigkeitspumpe ist, die Flüssigkeit aus einem Behälter (5) dem Trichter (2) zuführt und vorzugsweise über einen Antrieb der Füllmaschine (1) angetrieben wird.

15. Füllmaschine (1) nach mindestens einem der Ansprüche 10-14, **dadurch gekennzeichent,** dass die Leitung (3a,b) ein Ventil, insbesondere Rückschlagventil, umfasst.

## Claims

1. Method for filling foodstuffs comprising a predetermined proportion of pieces of filling (7) in liquid (6)
**characterized in that** said pieces of filling (7) are charged into a hopper (2),
said liquid (6) is during the filling process added in the lower region of said hopper (2) und
the mixed foodstuff is conveyed from said hopper (2) and filled.

2. Method according to claim 1, **characterized in that**, a certain amount of liquid per time or per unit volume of ready-mixed foodstuffs is during the filling process added for adjusting a certain proportion of liquid, where in particular the delivery capacity of a pump (4) adding said liquid is controlled or regulated accordingly.

3. Method according to claim 1 or 2, **characterized in that** the liquid charging level in said hopper (2) is adjusted, in particular regulated, for adjusting a specific proportion of liquid.

4. Method according to one of the preceding claims, **characterized in that** the charging level of said pieces of filling (7) is determined and the charging level is adjusted or regulated to a predetermined value or range, where in particular the charging level is set or regulated so low that it is less than 10% to 50% of the hopper height.

5. Method according to at least one of the claims 1-4, **characterized in that** charging said hopper (2) with pieces of filling (7) is done by way of a conveying device, where the delivery rate of said conveying device is regulated in dependence of the measured charging level of said pieces of filling.

6. Method according to at least one of the claims 1-5, **characterized in that** the predetermined proportion of pieces of filling (6) in said foodstuffs is in a range from 30% to 80%, in particular in a range from 40% to 70%, and preferably the volume of a piece is in a range from 1 cm³ to 80 cm³.

7. Method according to at least one of the claims 1-6, **characterized in that** said pieces of filling (7) comprise at least one filling from the following group: pieces of meat, pieces of vegetable, fish cuttings.

8. Method according to at least one of the claims 1-7, **characterized in that** said liquid is in particular a liquid from the following group: liquid aspic, oils, salad dressings, gravy, soups, stock.

9. Method according to at least one of the claims 1-8, **characterized in that** said liquid (6) is introduced in such a manner that it comprises a motion component in the horizontal direction.

10. Filling machine (1) for performing the method according to at least one of the claims 1-9 with
- a hopper (2) for receiving pieces of filling (7),
- a conveying mechanism for conveying the foodstuffs from said hopper (2) into a dosing element (14) and with
a feeding device (3a, b, 4) for feeding liquid (6) into the lower region of said hopper (2), **characterized in that** said filling machine (1) comprises a control device (9) which actuates said pump (4) in order to obtain a predetermined proportion of liquid in the foodstuffs.

11. Filling machine according to claim 10, **characterized in that** said feeding device (3a, b, 4) comprises a line (3a) opening into said lower region of said hopper (2), and a pump (4).

12. Filling machine (1) according to claim 10 or 11, **characterized in that** said line (3b) is configured in such a manner that the direction of motion of said liquid when exiting is substantially horizontal or at least comprises a directional component in the horizontal direction, where said line is preferably at least in sections disposed centered and comprises lateral outlet openings (8), or that said line at the lower end comprises a distributor device (3c) with several outlet openings (8).

13. Filling machine (1) according to at least one of the claims 10-12, **characterized in that** said filling machine comprises a charging level sensor (11) for the liquid (6) and/or a charging level sensor (12) for said pieces of filling (7).

14. Filling machine (1) according to at least one of the claims 10-13, **characterized in that** said pump is said conveying mechanism of a second filling machine (1'), in the hopper (2') of which said liquid (7) for the foodstuffs is stored or
that said pump is a separate liquid pump which feeds liquid from a container (5) to said hopper (2) and is preferably driven by way of a drive of said filling machine (1).

15. Filling machine (1) according to at least one of the claims 10-14, **characterized in that** said line (3a, b) comprises a valve, in particular a check valve.

## Revendications

1. Procédé de conditionnement d'une denrée alimentaire comprenant une proportion prédéterminée de morceaux ajoutés (7) dans du liquide (6),
**caractérisé en ce que** les morceaux ajoutés (7) sont versés dans une trémie (2),
le liquide (6) est ajouté dans la zone inférieure de la trémie (2) pendant le processus de conditionnement et
le mélange de denrée alimentaire est transporté et conditionné hors de la trémie (2).

2. Procédé selon la revendication 1, **caractérisé en ce que**, pour régler une proportion de liquide déterminée pendant le processus de conditionnement, une quantité de liquide déterminée dosée en fonction du temps ou du volume conditionné est ajoutée à une denrée alimentaire déjà mélangée, dans lequel notamment le débit d'une pompe (4) qui alimente le liquide en le dosant est commandé ou régulé en conséquence.

3. Procédé selon la revendication 1 ou 2, **caractérisé en ce que**, pour régler une proportion de liquide déterminée, le niveau de liquide dans la trémie (2) est réglé, notamment régulé.

4. Procédé selon au moins une des revendications précédentes, **caractérisé en ce que** le niveau des morceaux ajoutés (7) est déterminé et ce niveau est réglé ou régulé sur une valeur ou une zone prédéterminée, dans lequel notamment le niveau est réglé ou régulé si bas qu'il est inférieur à 10% à 50% de la hauteur de la trémie.

5. Procédé selon au moins une des revendications 1-4, **caractérisé en ce que** le remplissage de la trémie (2) par des morceaux ajoutés (7) s'effectue au moyen d'un convoyeur, dans lequel le débit du convoyeur est régulé en fonction du niveau mesuré des morceaux ajoutés.

6. Procédé selon au moins une des revendications 1-5, **caractérisé en ce que** la proportion prédéterminée des morceaux ajoutés (6) dans la denrée alimentaire est comprise entre 30% et 80%, notamment entre 40% et 70% et, de préférence, le volume d'un morceau est compris entre 1 cm³ et 80 cm³.

7. Procédé selon au moins une des revendications 1-6, **caractérisé en ce que** les morceaux ajoutés (7) comprennent au moins un produit ajouté appartenant au groupe suivant : morceaux de viande, morceaux de légumes, portions de poisson.

8. Procédé selon au moins une des revendications 1-7, **caractérisé en ce que** le liquide est notamment un liquide appartenant au groupe suivant : gelée liquide, huiles, sauces salade, sauces pour rôti, soupes, bouillons.

9. Procédé selon au moins une des revendications 1-8, **caractérisé en ce que** le liquide (6) est introduit de façon qu'il présente une composante de mouvement dans la direction horizontale.

10. Machine de remplissage (1) pour l'exécution du procédé selon au moins une des revendications 1-9, comprenant
- une trémie (2) destinée à recevoir des morceaux ajoutés (7),
- un mécanisme de transport destiné au transport de la denrée alimentaire de la trémie (2) dans un organe de dosage (14), et comprenant
- un dispositif d'alimentation (3a, b, 4) permettant d'alimenter du liquide (6) dans la zone inférieure de la trémie (2), **caractérisée en ce que** la machine de remplissage (1) comprend un dispositif de commande (9) qui commande une pompe (4) pour obtenir une proportion de liquide prédéterminée dans la denrée alimentaire.

11. Machine de remplissage (1) selon la revendication 10, **caractérisée en ce que** le dispositif d'alimentation (3a, b, 4) comprend une conduite (3a) qui débouche dans la zone inférieure de la trémie (2), ainsi qu'une pompe (4).

12. Machine de remplissage (1) selon la revendication 10 ou 11, **caractérisée en ce que** la conduite (3b) est conçue de manière à ce que la direction de mouvement du liquide à la sortie soit essentiellement horizontale ou présente au moins une composante directionnelle dans la direction horizontale, dans laquelle la conduite est de préférence agencée de manière centrée, au moins par section, et est pourvue d'ouvertures de sortie (8) latérales, ou **en ce que** la conduite comporte à son extrémité inférieure un dispositif distributeur (3c) pourvu de plusieurs ouvertures de sortie (8).

13. Machine de remplissage (1) selon au moins une des revendications 10-12, **caractérisée en ce que** la machine de remplissage comprend un capteur de niveau (11) pour le liquide (6) et/ou un capteur de niveau (12) pour les morceaux ajoutés (7).

14. Machine de remplissage (1) selon au moins une des revendications 10-13,
**caractérisée en ce que** la pompe est le mécanisme de transport d'une seconde machine de remplissage (1') dans la trémie (2') de laquelle est stocké le liquide (7) pour la denrée alimentaire, ou
**en ce que** la pompe est une pompe à liquide séparée qui alimente du liquide d'un récipient (5) vers la trémie (2) et est de préférence entraînée par un entraînement de la machine de remplissage (1).

15. Machine de remplissage (1) selon au moins une des revendications 10-14,
**caractérisée en ce que** la conduite (3a,b) comprend une soupape, notamment une soupape de non-retour.
